# EUROPÄISCHE PATENTSCHRIFT

(11) **EP 3 642 107 B1**
(45) Veröffentlichungstag und Bekanntmachung des Hinweises auf die Patenterteilung: **07.06.2023**
(21) Anmeldenummer: 18740847.1
(22) Anmeldetag: 17.07.2018
(51) Int. Cl.: B63H 1/14, B63H 1/26

(54) **PROPELLER FÜR EIN WASSERFAHRZEUG**
PROPELLER FOR A WATER VEHICLE
HÉLICE DESTINÉE À UN NAVIRE

(30) Priorität: 21.07.2017 DE 102017116516
(43) Veröffentlichungstag der Anmeldung: 29.04.2020
(73) Patentinhaber: Promarin Propeller und Marinetechnik GmbH, 50374 Erftstadt (DE)
(72) Erfinder: WEINRICH, Bernd, 50321 Brühl (DE); EBERHARD, Yannick, 50354 Hürth (DE); BREUERS-DRESSLER, Jan, 50674 Köln (DE)
(74) Vertreter: Freischem & Partner Patentanwälte mbB
(86) Internationale Anmeldenummer: PCT/EP2018/069327
(87) Internationale Veröffentlichungsnummer: WO 2019/016171

(56) Entgegenhaltungen:
- WO-A1-2016/113599
- DE-C- 914 224
- GB-A- 325 538
- GB-A- 191 010 811
- GB-A- 191 207 070
- GB-A- 191 504 977
- JP-A- S6 164 600
- KR-A- 20110 041 096
- KR-A- 20120 116 098
- US-A- 1 463 441
- US-A- 4 514 146

## Beschreibung

Die Erfindung betrifft einen Propeller für ein Wasserfahrzeug mit einer Nabe und mindestens zwei Flügeln, wobei sich die Flügel ausgehend von der Nabe in radialer Richtung nach außen erstrecken und der Propeller eine gleichmäßige Flügelteilung aufweist, wobei die Massenschwerpunkte aller Flügel in Bezug auf die Nabe den gleichen radialen Abstand zu der Nabe haben und/oder alle Flügel das gleiche Gewicht aufweisen. Insbesondere betrifft die Erfindung einen Propeller mit starrer Welle, einen Ruderpropeller, einen schwenkbaren Antrieb oder einen Außenbordantrieb für ein Schiff, Boot oder U-Boot.

Die Erfindung betrifft sowohl einen Festpropeller (Fixed Pitch Propeller FPP) als auch einen Verstellpropeller (Controllable Pitch Propeller CPP). Beim Verstellpropeller sind die Flügel um eine Achse drehbar an der Nabe befestigt. In diesem Fall gelten die geometrischen Angaben für den Auslegungspunkt (design point). Schließlich sind auch sogenannte "Build-Up-"Propeller mit drehbaren Flügeln bekannt, bei denen die Flügel verdreht und mit Schrauben in einer bestimmten Drehposition arretierbar sind.

Darüber hinaus kann der Propeller mit und ohne Düse, Ummantelung oder Teilummantelung betrieben werden. Der Propeller kann als Zug- oder Druckpropeller verwendet werden.

Bei einem Einsatz von Propellern zum Antrieb von Wasserfahrzeugen ist es bekannt, dass die von den einzelnen Flügeln erzeugten Druckwellen bzw. Druckimpulse zu einer resonanten Schwingungsanregung des Wasserfahrzeugs führen können und damit zu einer unerwünschten Geräuschbildung. Zur Vermeidung der Geräuschbildung ist es unter anderem aus US 2004 / 0 235 368 A1 bekannt, die Flügel am Umfang der Nabe in unterschiedlichen Abständen anzuordnen. Auch aus GB 521 868 A und US 4 253 800 A ist es bekannt, dass die Flügel bzw. Schaufeln eines Propellers in unregelmäßigen Abständen über den Umfang des Propellers verteilt angeordnet sind. Durch die unregelmäßige Anordnung der Flügel wird die Regelmäßigkeit der Druckstöße, welche von den Flügelspitzen der Propellerflügel auf den Schiffsrumpf übertragen werden, aufgehoben und die harmonische Anregung des Schiffsrumpfes vermindert. Gleichzeitig verliert der Propeller hierdurch seine dynamische Balance und kann eine Unwucht entwickeln. Unwuchten und über den Propellerumfang unterschiedliche Vortriebskräfte können zum einen den effektiven Vortrieb beeinträchtigen und zum anderen mechanische Kräfte erzeugen, die die Lebensdauer des Schiffsantriebs beeinträchtigen können und ihrerseits wieder zu Geräuschentwicklung führen können.

Aus CN 105 366 017 A ist ein Propeller bekannt, welcher eine Nabe mit ersten Flügeln (Primärflügel) und zweiten Flügeln (Sekundärflügel) aufweist. Die Primärflügel und Sekundärflügel sind abwechselnd und gleichmäßig über den Umfang der Nabe verteilt. Die Länge der Primärflügel ist erheblich viel größer als die Länge der Sekundärflügel und insbesondere doppelt so groß.

Der Stand der Technik offenbart weitere Propeller mit unkonventionellen Flügelgeometrien. So sind aus der US 1 463 441 A, der US 4 514 146 A, der KR 2011 0041096 A Propeller bekannt, deren Flügel unregelmäßig angeordnet sind. Durch die ungleichmäßige Flügelteilung sind Unwuchten zu befürchten. Die JP S61 64600 A beschreibt einen Flugzeugpropeller, bei dem jeder rotierende Flügel eine Kombination von rückwärts geneigtem Winkel und vorwärts geneigtem Winkel aufweist. Die Lage der Flügelspitzen ist hier nicht erwähnt. Die Druckschriften GB 325 538 A, DE 914 224 C und KR 2012 0116098 A offenbaren Verstellpropeller mit um ihre Längsachsen drehbare Propellerflügeln, teilweise mit zyklischen Verstellkulissen. Die WO 2016/113599 A1 schlägt dagegen einzeln um zur Welle parallele Achsen verdrehbare Propellerflügel vor, aber auch diese Verdrehung würde zu Unwuchten wegen ungleichmäßiger Flügelteilung führen. Die GB 07070 A schlägt einen Propeller mit gleichmäßiger Flügelteilung aber axialer Flügelverlagerung vor. Die GB 04977 A schlägt einen Propeller mit gleichmäßiger Flügelteilung aber verschiedenen Flügelgrößen vor. Beides dürfte zu Unwuchten führen. Die GB 10811 A schlägt nur einen Flügel vor, der sich um den gesamten Umfang der Nabe windet und eine variierende, nicht ausgewuchtete Gewichtsverteilung aufweist.

Die Aufgabe der vorliegenden Erfindung ist es, einen Propeller für ein Wasserfahrzeug, dessen Propellerflügel im Wesentlichen gleich groß bzw. gleich schwer sind, zur Verfügung zu stellen, durch den eine unerwünschte Geräuschbildung wirksam reduziert oder vermieden werden kann.

Die Aufgabe wird erfindungsgemäß mit den Merkmalen des Anspruchs 1 gelöst. Weitere praktische Ausführungsformen und Vorteile ergeben sich aus den abhängigen Ansprüchen.

Ein erfindungsgemäßer Propeller für ein Wasserfahrzeug umfasst eine Nabe und mindestens zwei Flügel, wobei sich die Flügel ausgehend von der Nabe in radialer Richtung nach außen zur Flügelspitze erstrecken, an der der Spitzenwirbel des Flügels entsteht, und der Propeller eine gleichmäßige Flügelteilung aufweist. Mit anderen Worten entspricht der Winkelabstand zwischen den auf der Nabe liegenden Wurzelpunkten der Erzeugenden (blade generator line) zweier aufeinanderfolgender Flügel jeweils 360° geteilt durch die Flügelzahl und ist somit für alle Flügel gleich. Die Flügel sind wie bei herkömmlichen Schiffspropellern gleichmäßig auf dem Umfang der Nabe verteilt. Der Winkelabstand zwischen den Wurzelpunkten der Erzeugenden zweier aufeinanderfolgender Flügel beträgt bei einem zweiflügligen Propeller 180°, bei einem dreiflügligen Propeller 120°, bei einem vierflügligen Propeller 90°, bei einem fünf-flügligen Propeller 72° usw.

Die angestrebte Reduktion der harmonischen Anregung wird dadurch erreicht, dass der Winkelabstand zwischen den Flügelspitzen zweier aufeinanderfolgender Flügel des Propellers gegenüber dem Winkelabstand zwischen den Flügelspitzen zweier anderer aufeinanderfolgender Flügel variiert, d.h. unterschiedlich ist.

Mit anderen Worten sind die Flügelspitzen unregelmäßig auf dem Umfang des Propellers verteilt. Der Winkel in Drehrichtung des Propellers zwischen zwei aufeinanderfolgenden Flügelspitzen variiert zumindest gegenüber dem Winkel zwischen zwei anderen aufeinanderfolgenden Flügelspitzen. Es können auch alle Winkel zwischen jeweils zwei aufeinanderfolgenden Flügelspitzen unterschiedlich sein.

Die Propellergeräusche resultieren aus erzwungenen harmonischen Schwingungen, vor allem aus der periodischen Anregung durch die einzelnen Propellerflügel über die Hülle des Schiffes. Der kritische Bereich ist hier die Position über dem Propeller. An der Flügelspitze des Propellers herrscht ein starkes Unterdruckgebiet aufgrund des kavitierenden Spitzenwirbels und der Tragflügelwirkung des Propellers vor. Dieses Unterdruckgebiet propagiert als Druckwelle durch den Raum und trifft auf den Schiffsrumpf. Durch die Variation der Abstände der Flügelspitzen aufeinanderfolgender Flügel ist der Zeitabstand von Druckwelle zu Druckwelle zweier aufeinanderfolgender Flügel unterschiedlich. Hierdurch wird die harmonische Anregung gestört und es können sogar einander auslöschende Anregungen erzielt werden. Dabei ist darauf hinzuweisen, dass in der Propellerkonstruktion der Begriff "Flügelspitze" unterschiedliche Bedeutungen haben kann. Mit "Flügelspitze" kann der Punkt des Flügels mit dem größten radialen Abstand von der Drehachse des Propellers bezeichnet werden, oder auch der Punkt des Flügels, an den die radial verlaufende Tangente auf der Abströmseite des Flügels anliegt. In dieser Beschreibung bezeichnet der Begriff "Flügelspitze" den Ort, der das stärkste Unterdruckgebiet erzeugt. An diesem Ort entsteht meist der Spitzenwirbel des Flügels.

Bei einem zweiflügligen Propeller ist folglich der Winkelabstand zwischen der ersten Flügelspitze und der zweiten Flügelspitze anders als der Winkelabstand zwischen der zweiten Flügelspitze und der ersten Flügelspitze. Mit anderen Worten weicht der Winkelabstand zwischen den zwei Flügelspitzen von 180° ab. Bei Propellern mit mehr Flügeln gibt es weitere Variationsmöglichkeiten für den Winkelabstand, wie nachfolgend erläutert wird.

Durch die aperiodischen Druckimpulse wird vermieden, dass das Wasserfahrzeug eine Anregung mit einer konstanten Frequenz erfährt, die im ungünstigsten Fall nahe der Eigenfrequenz des Wasserfahrzeuges liegt. Der erfindungsgemäße Propeller verringert oder vermeidet folglich die resonante Schwingungsanregung des Wasserfahrzeuges, welche eine Erhöhung der Schwingungsamplitude und damit eine Zunahme der Lautstärke zur Folge hätte. Die durch den Propeller verursachte Geräuschbildung wird deutlich verringert.

Wie oben erwähnt, gelten die unregelmäßigen Abstände der Flügelspitzen bei Verstellpropellern für den Auslegungspunkt, das heißt die Flügelstellung, die für den konstanten Normalbetrieb des Propellers vorgesehen ist.

Eine ausgehend von dem Mittelpunkt der Nabe durch den Wurzelpunkt des an die Nabe grenzenden Flügelprofils führende radiale Gerade wird üblicherweise als Propellerreferenzlinie (propeller generator line) bezeichnet. Bei aus dem Stand der Technik bekannten Propellern wird der Propeller derart konstruiert, dass ein Flügel in Bezug auf die Propellerreferenzlinie festgelegt wird und weitere Flügel gemäß dieser Konstruktion an der Nabe angeordnet werden, indem die Propellerreferenzlinie jeweils um den Winkel der Flügelteilung um die Propellerachse gedreht wird. Bei einem erfindungsgemäßen Propeller weist zumindest ein Flügel gegenüber einem anderen Flügel einen bezogen auf die Propellerreferenzlinie abweichenden Verlauf auf. Insoweit trifft der Begriff Propellerreferenzlinie hier nicht zu. Für diese Anmeldung wird die radial verlaufende Verbindungslinie zwischen dem Mittelpunkt der Nabe (der Rotationsachse) und dem Wurzelpunkt des an die Nabe grenzenden Profils eines Flügels als radiale Gerade durch den Wurzelpunkt bezeichnet.

Die Massenschwerpunkte aller Flügel haben den gleichen radialen Abstand zu der Nabe. Dies wirkt sich positiv auf den Rundlauf des Propellers aus und es werden Unwuchten vermieden. Wenn der Massenschwerpunkt aller Flügel des Propellers in der gleichen axialen Ebene liegt und zusätzlich den gleichen radialen Abstand zur Nabe hat, fallen Rotationsachse und die Hauptträgheitsachse des Propellers zusammen und es werden statische wie dynamische Unwuchten vermieden.

Alternativ oder in Ergänzung dazu weisen alle Flügel das gleiche Gewicht auf.

Die unterschiedlichen Abstände aufeinander folgender Flügelspitzen können in der Praxis durch unterschiedliche Profilverläufe der aufeinanderfolgenden Flügel erreicht werden. Die Flügel von Schiffspropellern werden in der Regel ausgehend von der Nabe in radialer Richtung als Folge aufeinanderfolgender Flügelprofilschnitte konstruiert. Die Flügelprofilsprofilschnitte eines Flügels haben in der Regel von der Nabe nach außen variierende Sehnenlängen, Anstellwinkel und Dicken. Jeder Flügelprofilschnitt wird in der Regel auf einer Zylinderfläche um die Propellerachse bestimmt. Eine detaillierte Beschreibung der Eigenschaften und Konstruktionsmerkmale von Propellern zum Antreiben von Wasserfahrzeugen findet sich in Kapitel 3 des Buchs "Marine Propellers and Propulsion", 3rd Edition, des Autors: John Carlton, ISBN: 9780080971230, das hiermit zum Gegenstand der vorliegenden Beschreibung gemacht wird.

Die Flügel aktueller Propeller weisen in der Regel eine Flügelrücklage, auch Skew genannt, auf. Das heißt, dass die Schwerpunkte der Flügelprofilschnitte in der Propellerebene in Bezug auf eine radiale Gerade durch den Wurzelpunkt verschoben sind, wobei der Wurzelpunkt der Schwerpunkt des innersten, an die Nabe grenzenden Flügelprofilschnitts ist. Die Folge der Schwerpunkte aller Flügelprofilschnitte von der Nabe bis zum maximalen Umfang des Propellers ist die Erzeugende des Flügels (blade generator line). Bei Flügeln ohne Flügelrücklage verläuft die Erzeugende gerade in radialer Richtung. Bei Flügelrücklage werden die Flügelprofilschnitte zu der radialen Geraden durch den Wurzelpunkt verschoben. Der radiale Verlauf der Verschiebung kann variiert werden.

Der Skew wird in der Regel als Winkel der in der projizierten Ansicht (projected view), das heißt in der Draufsicht auf die Propellerebene in axialer Richtung gemessen. John Carlton definiert in dem oben genannten Buch einen Skew-Winkel, als den größten an der Nabenachse gemessenen Winkel in der projizierten Ansicht bzw. Draufsicht (projected view) zwischen zwei Linien, die von der Nabenachse zur Erzeugenden des Flügels verlaufen. Dies ist üblicherweise der Winkel in der Draufsicht zwischen der anströmseitigen Tangente an die Erzeugende und dem abströmseitigen Austrittspunkt der Erzeugenden aus dem Flügelprofil. Gemäß einer anderen Definition wird der Skew-Winkel in der projizierten Ansicht (projected view) zwischen der durch die Propellerachse verlaufenden, radialen Tangente an die Erzeugende und der radialen Tangente an die Abströmkante des Flügels gemessen wird. Übliche Werte für den Skew-Winkel liegen heute bei 30° bis 50°, können aber auch durchaus höher liegen. Abweichend von dem Skew-Winkel existieren nach G. Kuiper "The Wageningen Propeller Series" eine Skewverteilung bei der der radiale Verlauf der lokalen Profilrücklage festgelegt wird. Dabei können auch unterschiedliche radiale Verteilungen des Skewsverlaufs bei gleichem Skew-Winkel gewählt werden. Bei einem sogenannten "balanced Skew" sind die inneren Flügelprofilschnitte nahe der Nabe in Drehrichtung zur radialen Geraden durch den Wurzelpunkt (Sehnenmitte des an die Nabe grenzenden Flügelprofilschnitts) verschoben. In diesem Bereich weist der Flügel also eine Vorlage auf. Die Verschiebung ändert sich kontinuierlich, wobei die Erzeugende die radiale Gerade durch den Wurzelpunkt schneidet und sich dann weiter nach hinten erstreckt, so dass im äußeren Bereich des Flügels eine Rücklage entsteht. Die Erzeugende schneidet bei aktuellen Designs die Gerade durch den Wurzelpunkt bei einem Wert von 0,7 der radialen Erstreckung des Flügels.

Es ist aber auch ein sogenannter "biased Skew" bekannt, bei dem die Flügelprofilschnitte ab der Nabe eine Rücklage aufweisen, also gegenüber der radialen Geraden durch den Wurzelpunkt entgegen der Drehrichtung verschoben sind. Hier zeigen sich die Vorzüge der Carlton-Definition des Skews weil eine wirkliche Tangente an die Erzeugende nicht existiert. So können sich die Flügelspitzen von Flügeln mit gleichem Skew-Winkel aber unterschiedlichem Skew-Verlauf an unterschiedlichen Winkelpositionen in der projizierten Ansicht des Propellers befinden. Auch eine Verschiebung in Drehrichtung ist möglich und wird allgemein mit "backward Skew" bezeichnet.

In der Praxis können mindestens zwei Flügel des Propellers einen unterschiedlichen Verlauf der Flügelrücklage [Skew] aufweisen, um die unterschiedlichen Werte der Winkelabstände zwischen den Flügelspitzen eines ersten Paars und eines zweiten Paars aufeinanderfolgender Flügel zu erzielen. Dabei können die zwei Flügel unterschiedliche Skew-Winkel aufweisen. Zusätzlich oder alternativ können die zwei Flügel unterschiedliche Krümmungen der Erzeugenden aufweisen, um die unterschiedlichen Werte der Winkelabstände zwischen den Flügelspitzen eines ersten Paars und eines zweiten Paars aufeinanderfolgender Flügel zu erzielen. Bisher sind nur Propeller bekannt, bei denen die einzelnen Flügel weitgehend identische Formen aufweisen. Der Vorschlag, die Flügel mit gleichen oder ähnlichen Profilschnitten auszustatten, aber unterschiedliche Verläufe der Flügelrücklage vorzusehen, ermöglicht es, Flügel mit sehr ähnlichen hydrodynamischen Eigenschaften zu schaffen, die dennoch bei jedem Flügel eine unterschiedliche Lage der Flügelspitze bezogen auf die radiale Gerade durch den Wurzelpunkt der Erzeugenden aufweisen. Hierdurch lassen sich die harmonischen Anregungen durch den Propeller reduzieren aber dennoch ein ausgewuchtetes (balanced) Design realisieren.

Der Verlauf der Erzeugenden eines ersten Flügels kann von dem Verlauf der Erzeugenden des mindestens einen weiteren Flügels abweichen. Hieraus ergibt sich ein unterschiedlicher Verlauf des Skews, der zu einer Verlagerung der Flügelspitze führt.

Um unterschiedliche Skews bei den Flügeln eines Propellers festzustellen, genügt es, den Winkel in der projizierten Ebene zwischen der Tangente an die Anströmkante und der Tangente an die Abströmkante zu messen. Der ermittelte Winkel entspricht zwar nicht der Skew-Definition, erlaubt es aber, von Schaufel zu Schaufel veränderte Verläufe der Schaufelform zu erkennen.

Mindestens zwei Flügel können in der Praxis unterschiedliche Erstreckungen in radialer Richtung aufweisen. Auch kann in der Praxis der Verlauf der Steigung (Pitch) des ersten Flügels vom Wurzelpunkt bis zur Flügelspitze von dem Steigungsverlauf des mindestens einen weiteren Flügels abweichen.

Wenn ein Flügel einen sehr geringen Skew hat, werden die durch die Spitzenwirbel induzierten Druckimpulse stärker. Um die Impulse zu reduzieren kann man die Flügelspitze entlasten. Dies bedeutet, dass die Steigung (pitch) an der Flügelspitze zurückgenommen wird (Profilanstellung wird verringert). Hierdurch sinken die Druckimpulse betragsmäßig, da weniger Schub an der Spitze erzeugt wird. Entlastet man die Spitze, so muss die Steigung auf unteren Flügelprofilschnitten erhöht werden, da nur auf diese Weise eine gleiche Leistungsaufnahme durch die verschiedenen Flügel gewährleistet werden kann.

Falls der Propeller eine gerade Flügelzahl größer als zwei aufweist, können einander gegenüberliegende Flügel identisch ausgebildet sein. Hierdurch ist gewährleistet, dass einander gegenüberliegende Flügel keine Massenunwucht erzeugen und die gleichen hydrodynamischen Eigenschaften aufweisen. Durch die abweichende Flügelform der zwischen den einander diametral gegenüberliegenden Flügeln angeordneten Flügeln wird eine konstante Frequenz der auftretenden Druckimpulse vermieden.

Alternativ oder bei einer ungeraden Anzahl von Flügeln können auch alle Flügel voneinander abweichende Lagen der Flügelspitzen aufweisen. Hierdurch ergibt sich ein besonders hoher Grad an Abweichung von einer harmonischen Druckanregung, wobei allerdings zur Bewahrung der Balance des Propellers konstruktive Maßnahmen zu ergreifen sind.

Um statische und dynamische Unwuchten zu vermeiden, kann der Verlauf des Flügelhangs [Rake] an den Verlauf der Flügelrücklage angepasst sein. Variationen des Verlaufs der Flügelrücklage (Skew) und der Steigung (Pitch) der einzelnen Flügel, welche die Variation der Lage der Flügelspitze bewirken, können dadurch ausgeglichen werden, dass der Verlauf des Flügelhangs, das heißt die Profilverlagerung in Richtung der Propellerachse, so angepasst wird, das der gesamte Propeller ausgewuchtet ist.

Durch die Variation des Skews und damit des Verlaufs der Erzeugenden der unterschiedlichen Flügel können sich unterschiedliche Längen der Erzeugenden ergeben. Die hierdurch verursachte Gewichtszunahme kann z.B. dadurch kompensiert werden, dass die Sehnenlängen oder die Profildicken der einzelnen Flügelprofilschnitte in deren unterschiedlichen radialen Profilschnitten variiert werden.

Der Abstand der Flügelspitzen zweier aufeinanderfolgender Flügel kann derart gewählt sein, dass im Auslegungspunkt die von verschiedenen Flügelspitzen erzeugten Druckimpulse beim Eintreffen am Schiffsrumpf einander zumindest teilweise auslöschen.

Im Auslegungspunkt, das heißt bei einem starren Propeller bei Nenndrehzahl und bei einem Verstellpropeller bei Nenndrehzahl und bei der für den Dauerbetrieb vorgegebenen Flügelanstellung, wird folglich nicht nur die konstante Frequenz der Druckimpulse aufgehoben. Die Druckimpulse durch aufeinander folgende Flügelspitzen können derart aufeinander folgen, dass sie sich in dem Schiffsrumpf zumindest teilweise auslöschen.

Der Abstand der Flügelspitzen zweier aufeinanderfolgender Flügel kann derart gewählt sein, dass im Auslegungspunkt, der Druckpuls der Schwingung des Rumpfes entgegenwirkt.

Praktische Ausführungsformen der Erfindung sind nachfolgend im Zusammenhang mit den beigefügten Zeichnungen beschrieben. Es zeigen:
- Fig. 1: eine erste Ausführungsform eines erfindungsgemäßen Propellers mit drei Flügeln in einer Draufsicht auf die Propellerebene,
- Fig. 2: die erste Ausführungsform aus Fig. 1 mit eingezeichneten Erzeugenden und radialen Geraden durch die Wurzelpunkte,
- Fig. 3: die erste Ausführungsform aus Fig. 1 und 2 mit angegebenen Skewwinkel,
- Fig. 4: eine zweite Ausführungsform eines erfindungsgemäßen Propellers mit vier Flügeln in einer Draufsicht auf die Propellerebene,
- Fig. 5: eine dritte Ausführungsform eines erfindungsgemäßen Propellers mit vier Flügeln in einer Draufsicht auf die Propellerebene,
- Fig. 6: eine vierte Ausführungsform eines erfindungsgemäßen Propellers mit sechs Flügeln in einer Draufsicht auf die Propellerebene, und
- Fig. 7: eine schematische Darstellung von erzeugten Druckpulsen,
- Fig. 8: ein Diagramm des Verlaufs der Profildicken und der Sehnenlängen der Radienschnitte eines beispielhaften Flügelprofils,
- Fig. 9: ein Diagramm der Verteilung von Profildicken und Sehnenlängen in Draufsicht auf die Propellerebene,
- Fig. 10: einen skalierten Radienschnitt eines Flügelprofils,
- Fig. 11: aus den Profildicken generierte Volumenelemente,
- Fig. 12: Verlauf der Profildicken und Sehnenlängen mit einer Verschiebung der Profile im äußeren Abschnitt des Flügels,
- Fig. 13: Verlauf der Profildicken und Sehnenlängen mit einer Verschiebung der Profile in der gesamten Flügelerstreckung,
- Fig. 14: Vergleich der Erzeugenden mit Skewverlauf zum Verlauf der Erzeugenden des Ausgangsentwurfs.

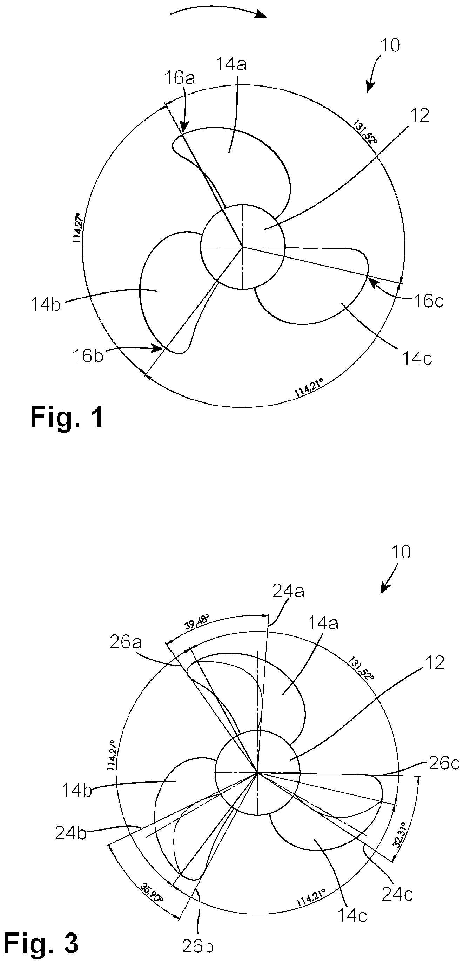

In Fig. 1 ist ein Propeller 10 für ein Wasserfahrzeug in einer ersten Ausführungsform dargestellt. Vorliegend ist der Propeller 10 in einer Draufsicht auf die Propellerebene in Richtung der Rotationsachse des Propellers 10 dargestellt. Die Rotationsachse des Propellers 10 erstreckt sich folglich in die Blattebene hinein.

Der Propeller 10 weist eine nur schematisch dargestellte Nabe 12 auf. Ausgehend von der Nabe 12 erstrecken sich drei Flügel 14a, 14b, 14c in radialer Richtung.

Die Flügel 14a, 14b, 14c weisen jeweils eine Flügelspitze 16a, 16b, 16c auf, wobei die Flügelspitze 16a, 16b, 16c als der Ort definiert ist, der das stärkste Unterdruckgebiet erzeugt und an dem der Spitzenwirbel des Flügels 14a, 14b, 14c entsteht. In der gezeigten Ausführungsform handelt es sich bei den Flügelspitzen 16a, 16b, 16c jeweils um den Schwerpunkt des radial äußersten Profilschnittes. Ein Profilschnitt ist, wie oben erwähnt, jeweils ein Schnitt durch die Flügel 14a, 14b, 14c, der auf einer Zylindermantelfläche liegt.

Der Winkelabstand zwischen den jeweiligen Flügelspitzen 16a, 16b, 16c der Flügel 14a, 14b, 14c variiert. In der hier gezeigten Ausführungsform beträgt der Winkelabstand zwischen der ersten Flügelspitze 16a des ersten Flügels 14a und der zweiten Flügelspitze 16b des zweiten Flügels 14b 114,27°. Der Winkelabstand zwischen der zweiten Flügelspitze 16b und der dritten Flügelspitze 16c beträgt ebenfalls 114,21° und der Winkelabstand zwischen der dritten Flügelspitze 16c und der ersten Flügelspitze 16a beträgt 131,52°.

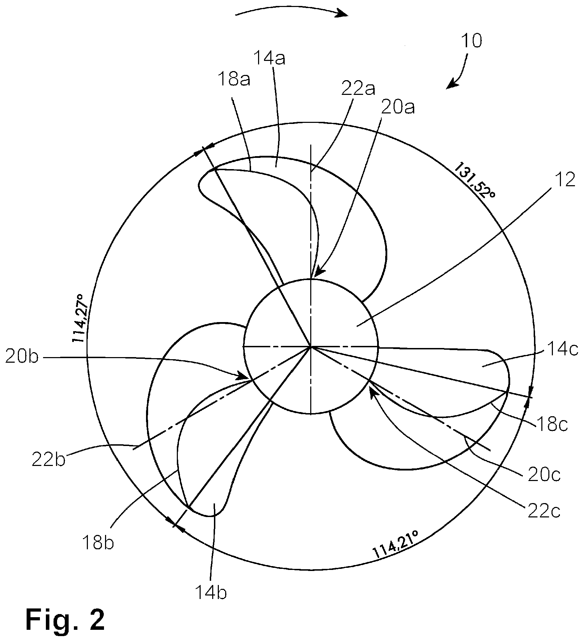

In Fig. 2 ist der Propeller 10 aus Fig. 1 nochmal gezeigt, wobei hier zusätzlich jeweils eine Erzeugende 18a, 18b, 18c eingezeichnet ist. Die Erzeugende 18a, 18b, 18c verbindet jeweils die Schwerpunkte der einzelnen Profilschnitte des entsprechenden Flügels 14a, 14b, 14c.

Der Bereich, in dem die Flügel 14a, 14b, 14c an die Nabe 12 angebunden sind, ist der Wurzelbereich. Der Schwerpunkt des radial innersten Profilschnitts wird als Wurzelpunkt 20a, 20b, 20c bezeichnet. In Fig. 2 ist neben der Erzeugenden 18a, 18b, 18c auch für jeden Flügel 14a, 14b, 14c eine radiale Gerade durch den Wurzelpunkt 22a, 22b, 22c gezeichnet (gestrichelte Linie), welche jeweils orthogonal zu und durch die Rotationsachse des Propellers 10 verläuft sowie durch den Wurzelpunkt 20a, 20b, 20c des jeweiligen Flügels 14a, 14b, 14c. Der Winkelabstand der radialen Geraden durch den Wurzelpunkt 22a, 22b, 22c gibt die Flügelteilung an. Die Flügelteilung ist gleichmäßig, das heißt der Winkelabstand der radialen Geraden durch den Wurzelpunkt 22a, 22b, 22c ist zwischen allen aufeinander folgenden Flügeln 14a, 14b, 14c gleich. Bei drei Flügeln 14a, 14b, 14c beträgt der Winkelabstand zwischen zwei aufeinanderfolgenden radialen Geraden durch den Wurzelpunkt 22a, 22b, 22c jeweils 120°.

Die radiale Gerade durch den Wurzelpunkt 22a, 22b, 22c und die Erzeugende 18a, 18b, 18c schneiden sich im Wurzelpunkt 20a, 20b, 20c. Bei den hier gezeigten Flügeln 14a, 14b, 14c handelt es um Flügel 14a, 14b, 14c mit einem sogenannten "balanced Skew", das heißt, die Erzeugende 18a, 18b, 18c erstreckt sich in einem inneren radialen Abschnitt in Drehrichtung gegenüber der radialen Geraden durch den Wurzelpunkt 22a, 22b, 22c und in einem radial äußeren Abschnitt entgegen der Drehrichtung gegenüber der radialen Geraden durch den Wurzelpunkt 22a, 22b, 22c. Der Schnittpunkt der Erzeugenden 18a, 18b, 18c jedes Flügels 14a, 14b, 14c mit der radialen Gerade 22a, 22b, 22c durch den Wurzelpunkt 22a, 22b, 22c weist einen radialen Abstand zur Propellerachse auf, der etwa dem 0,7-fachen des Propellerradius entspricht.

Der variierende Winkelabstand zwischen den Flügelspitzen 16a, 16b, 16c ist in dem ersten Ausführungsbeispiel durch einen unterschiedlichen Verlauf der Erzeugenden 18a, 18b, 18c und einen unterschiedlichen Skewwinkel hervorgerufen.

In Fig. 3 ist der Skewwinkel dargestellt. Obwohl in der Literatur auch abweichende Definitionen verwendet werde, bezeichnet im Rahmen dieser Anmeldung der Skew den Winkel, der sich zwischen einer radial zur Propellerachse verlaufenden Tangente 24a, 24b, 24c an den in Drehrichtung äußersten bzw. vordersten Punkt der Erzeugenden 18a, 18b, 18c und einer radialen Tangente 26a, 26b, 26c an die Abströmkante des jeweiligen Flügels 14a, 14b, 14c. Die Skewwinkel sind vorliegend alle drei unterschiedlich. Der Skewwinkel des ersten Flügels 14a beträgt 39,48°, der Skewwinkel des zweiten Flügels 14b 35,90° und der Skewwinkel des dritten Flügels 14c 32,31°.

Es wird darauf hingewiesen, dass auch ein variierender Winkelabstand der Flügelspitzen 16a, 16b, 16c erzielt werden kann, wenn bei gleichem Skewwinkel jeweils nur der Verlauf der Erzeugenden 18a, 18b, 18c der drei Flügel variiert.

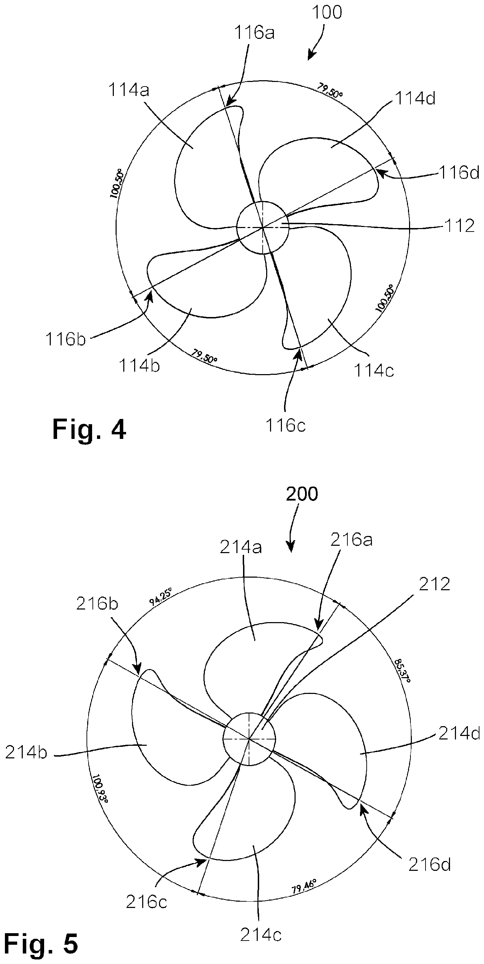

In Fig. 4 ist eine zweite Ausführungsform eines Propellers 100 dargestellt. An der Nabe 112 dieser zweiten Ausführungsform sind vier Flügel 114a, 114b, 114c, 114d angeordnet. Die einander diametral gegenüberliegenden Flügel 114a, 114b, 114c, 114d sind jeweils identisch ausgebildet. Ein Paar diametral gegenüberliegender Flügel 114a, 114c unterscheidet sich von dem anderen Flügelpaar 114b, 114d. Das heißt, der erste Flügel 114a und der dritte Flügel 114c weisen in Bezug die radiale Gerade durch den Wurzelpunkt (in Fig. 4 nicht dargestellt) einen identischen Verlauf der Erzeugenden (in Fig. 4 nicht dargestellt) auf und ebenfalls einen identischen Skewwinkel. Gleiches gilt für den zweiten Flügel 114b und den vierten Flügel 114d, wobei deren Verlauf der Erzeugenden und Skewwinkel von denjenigen des ersten Flügels 114a und dritten Flügels 114c abweichen.

Der Winkelabstand zwischen der ersten Flügelspitze 116a und der zweiten Flügelspitze 116b, sowie der Winkelabstand zwischen der dritten Flügelspitze 116c und der vierten Flügelspitze 116d beträgt jeweils 100,50°. Der Winkelabstand zwischen der zweiten Flügelspitze 116b und der dritten Flügelspitze 116c, sowie der Winkelabstand zwischen der vierten Flügelspitze 116d und der ersten Flügelspitze 116a beträgt jeweils 79,50°.

In Fig. 5 ist eine dritte Ausführungsform eines Propellers 200 abgebildet, an dessen Nabe 210 ebenfalls vier Flügel 214a, 214b, 214c, 214d angeordnet sind. Die vier Flügel 214a, 214b, 214c, 214d weisen jeweils einen unterschiedlichen Verlauf der Erzeugenden in Bezug auf die radiale Gerade durch den Wurzelpunkt und einen unterschiedlichen Skewwinkel auf.

Die Winkelabstände zwischen einzelnen Flügelspitzen 216a, 216b, 216d, 216d sind in dieser dritten Ausführungsform alle unterschiedlich. Der Winkelabstand zwischen der ersten Flügelspitze 216a und der zweiten Flügelspitze 216b beträgt 100,93°. Der Winkelabstand zwischen der zweiten Flügelspitze 216b und der dritten Flügelspitze 216c beträgt 79,46°. Der Winkelabstand zwischen der dritten Flügelspitze 216c und der vierten Flügelspitze 216d beträgt 85,37° und der Winkelabstand zwischen der vierten 216d Flügelspitze und der ersten Flügelspitze 216a beträgt 94,25°.

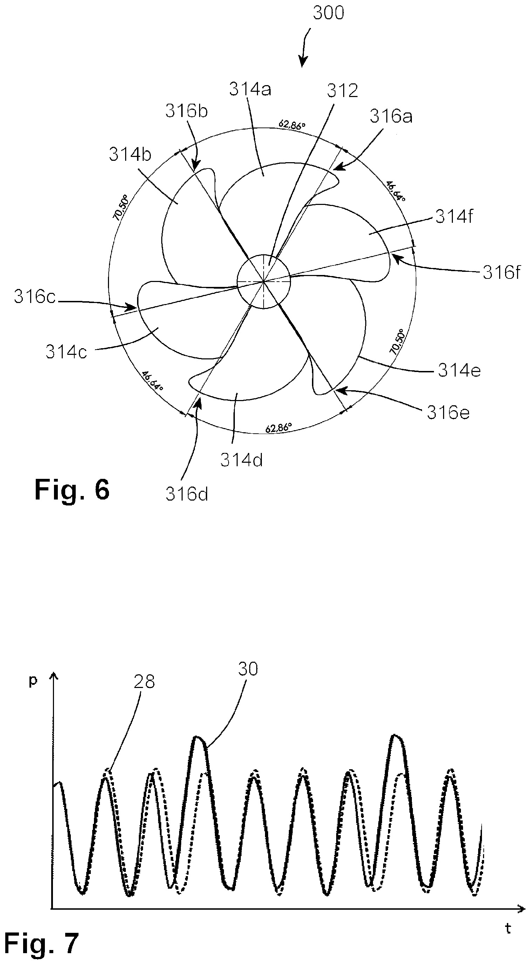

Die vierte in Fig. 6 gezeigte Ausführungsform eines Propellers 300 weist sechs Flügel 314a, 314b, 314c, 314d, 314e, 314f auf, die sich jeweils von der Nabe 312 ausgehend in radialer Richtung erstrecken. Jeweils zwei einander diametral gegenüberliegende Flügel sind identisch ausgebildet. Der Winkelabstand zwischen der ersten Flügelspitze 316a und der zweiten Flügelspitze 316b, sowie zwischen der vierten Flügelspitze 316d und der fünften Flügelspitze 316e beträgt 62,86°.Der Winkelabstand zwischen der zweiten Flügelspitze 316b und der dritten Flügelspitze 316c, sowie der fünften Flügelspitze 316e und der sechsten Flügelspitze 316f beträgt 70,50°. Der Winkelabstand zwischen der dritten Flügelspitze 316c und der vierten Flügelspitze 316d, sowie zwischen der sechsten Flügelspitze 316f und der ersten Flügelspitze 316a beträgt 46,64°.

Fig. 7 zeigt schematisch einen Druckverlauf für zwei verschiedene Propeller. Die gestrichelte Linie zeigt einen Druckverlauf 28 eines aus dem Stand der Technik bekannten Propellers mit vier identischen Flügeln ab. Die aufeinander folgenden Flügelspitzen weisen jeweils den gleichen Winkelabstand auf und bei konstanter Drehzahl folgen die Maxima der Druckpulse mit gleicher Frequenz und Amplitude aufeinander. Diese Druckpulse regen den Schiffsrumpf sehr gleichförmig an. Falls die von einem solchen Propeller mit identischen Flügeln ausgehende Frequenz der Druckpulse nahe einer Eigenfrequenz des Rumpfes des Wasserfahrzeuges liegt, so wird der Rumpf zu einer resonanten Schwingung angeregt und es kann zu einer erheblichen Lärmbelastung und dynamischen Belastung des Rumpfes kommen.

Mit der durchgezogenen Linie ist ein Druckverlauf 30 für einen exemplarischen erfindungsgemäßen Propeller mit vier Flügeln dargestellt. Beispielsweise könnte es sich um einen Propeller gemäß der dritten Ausführungsform handeln, wobei die vier Flügel jeweils unterschiedliche Winkelabstände aufweisen.

Wie gut zu erkennen ist, treten die Maxima der Druckpulse in Kurve 30 aperiodisch auf und wiederholen sich erst nach einer vollständigen Umdrehung des Propellers. Außerdem bewirkt ein unterschiedlicher Verlauf der Erzeugenden und der Skewwinkel eine unterschiedliche Höhe des Druckes, der an der Flügelspitze entsteht, und damit eine unterschiedliche Amplitude des berechneten Signals. Damit wird eine gleichförmige und insbesondere resonante Anregung eines Schiffsrumpfes vermieden und einer Geräuschbildung effektiv entgegengewirkt.

In der vorangehenden Beschreibung wurde hauptsächlich die Flügelgeometrie der Propeller in der Draufsicht auf die Propellerebene in axialer Richtung besprochen. In dieser Ansicht ist der Winkelabstand zwischen den Flügelspitzen aufeinanderfolgender Flügel eines Propellers zu erkennen, der für die Verringerung harmonischer Anregungen des Schiffsrumpfs maßgeblich ist. In Bezug auf die Festlegung der anderen geometrischen Merkmale der Propellerflügel bestehen gestalterische Freiheiten. Beispielsweise werden in Kapitel 3 des Buchs "Marine Propellers and Propulsion", 3rd Edition, des Autors: John Carlton, ISBN: 9780080971230 die Gesetzmäßigkeiten für die Festlegung der Propeller- und Flügelgeometrie beschrieben. Nachfolgend werden anhand eines Beispiels Geometrievorgaben erläutert, die einen funktionsfähigen und ausgewuchteten Propeller definieren.

Um einen Propeller mit verschiedenen Winkelabständen zwischen den Flügelspitzen zu realisieren kann wie folgt für jeden Flügel vorgegangen werden:

### 1. Herstellen der zylindrischen Balance

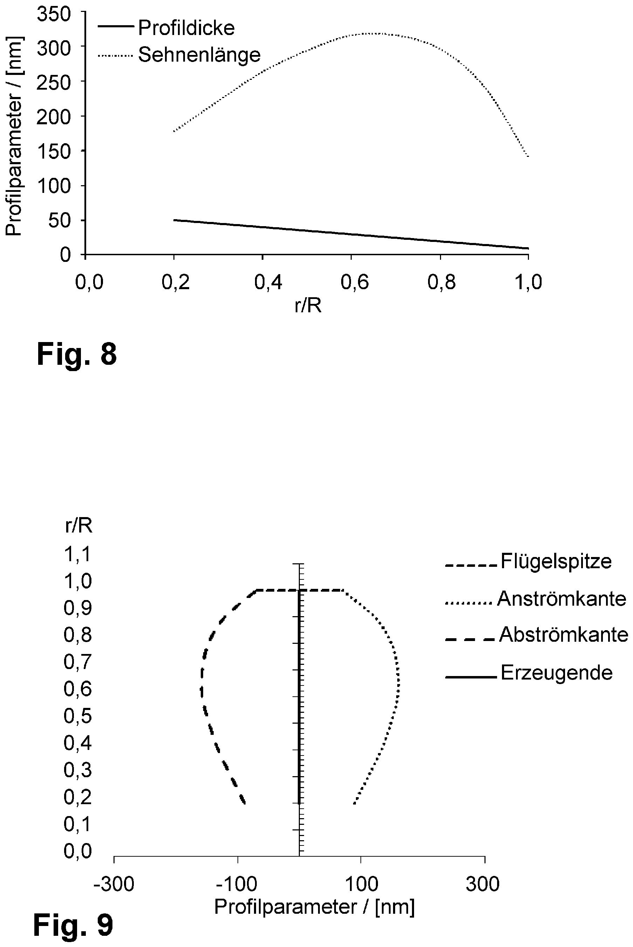

In einem ersten Schritt wird eine beliebige Anzahl von Radienschnitten des Flügels gewählt, auf denen die Profile definiert werden. Es wird eine radiale Profildickenverteilung und eine Profillängenverteilung gewählt. Ein exemplarischer Verlauf der Profildicke und der Sehnenlänge über den Radius ist in der Fig. 8 dargestellt. Diese Verteilungen ergeben in Draufsicht ohne Skew den in Fig. 9 dargestellten Propellerflügel. Die Erzeugende des Flügels verläuft in Fig. 9 gerade nach oben und verbindet die Sehnenmitte der Flügelprofile in den jeweiligen Radienschnitten. Die Sehnenmitte fällt bei den gewählten Profilen mit dem jeweiligen Profilschwerpunkt zusammen. Bei der in Fig. 9 erkennbaren Verteilung der Flügelprofile ohne Skew entspricht die Erzeugende der radialen Gerade durch den Wurzelpunkt. Die gepunktete Linie stellt die Anströmkante (leading edge = L.E.) und die gestrichelte Linie die Abströmkante (trailing edge = T.E.) dar.

Um die Position der Flügelspitze zu verlagern ist folgendes Vorgehen sinnvoll.

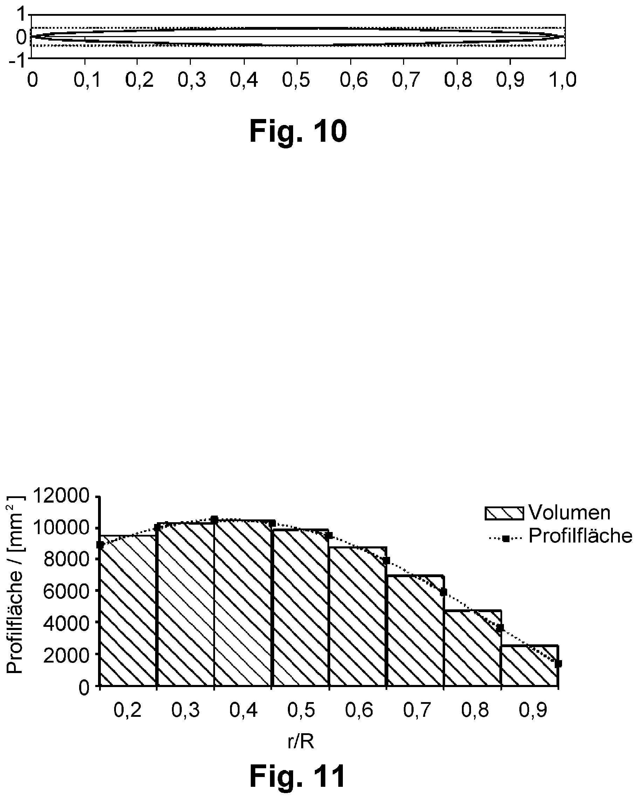

In der Regel wird mit ähnlichen Dickenverteilungen der Flügelprofile über alle Radienschnitte gearbeitet. Die Dickenverteilung hat einen festen Formfaktor, der angibt, welcher Anteil des Produktes aus Sehnenlänge und maximaler Profildicke von der Fläche des Radienschnitts abgedeckt wird. Die Fläche eines Profils kann folglich sehr gut durch das Produkt aus
Profildicke * Sehnenlänge * Formfaktor
approximiert werden. Ein beispielhafter Verlauf eines skalierten Profils ist schematisch in Fig. 10 dargestellt. Aus den Profilflächen werden dann abhängig vom radialen Abstand Volumenelemente generiert. Die verschiedenen Größen dieser Volumenelemente über den Radius des Propellers sind in der Fig. 11 zu erkennen.

Diese Volumenelemente entsprechen auch der radialen Verteilung der prozentualen Anteile am Gesamtgewicht des Flügels, aus denen sich die Schwerpunktlage des Flügels sowohl in radialer Richtung als auch in Umfangsrichtung ergibt. Um einen ausgewuchteten Propeller zu erzielen, sollten alle Flügel das gleiche Gewicht haben und ihre Schwerpunkte gleichmäßig über den gesamten Umfang des Propellers verteilt sein.

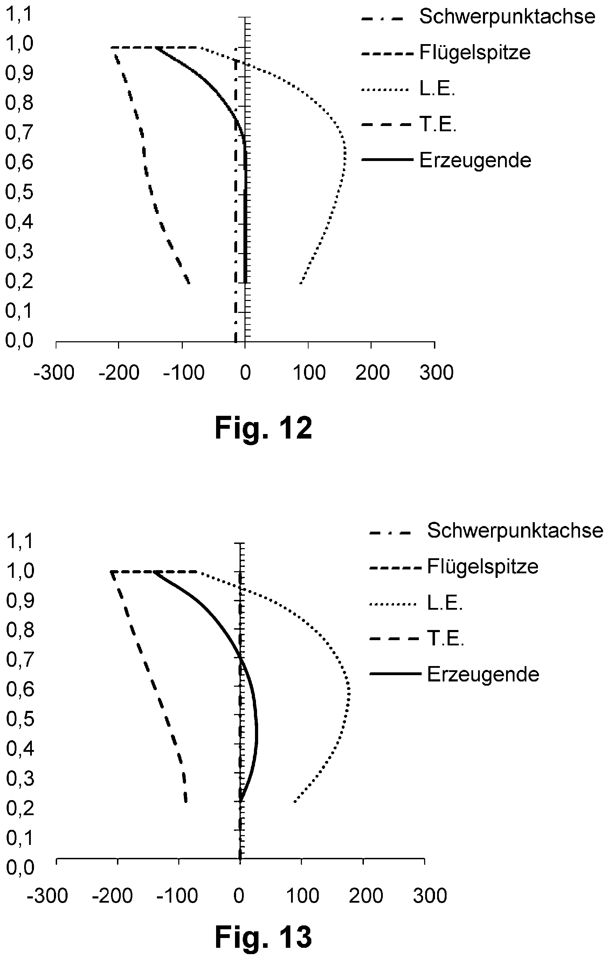

Verschiebt man die Flügelspitze entgegen der Drehrichtung, so verschiebt sich auch der Gesamtschwerpunkt des Propellers in die gleiche Richtung, entsprechend des prozentualen Anteils der verschobenen Volumenelemente. In einem ersten Schritt wählt man die Verschiebung der Flügelspitze für den Flügel. Der Verlauf der Profildicken und Sehnenlängen mit einer Verschiebung der Profile im äußeren Abschnitt des Flügels entgegen dessen Drehrichtung, d.h. zur Abströmkante (T.E.) hin, ist in Fig. 12 dargestellt.

Im zweiten Schritt müssen die radial innen liegenden Radienschnitte in entgegengesetzter Richtung verschoben werden, um den Schwerpunkt wieder so zu verschieben, dass sie durch den Wurzelpunkt (Profilmitte des an die Nabe grenzenden Profils) verläuft. Wenn die Ausgangslage der Flügelspitze aus Fig. 9 zur Lage in Fig. 12 verlagert werden soll, muss der Verlauf der Erzeugenden im Bereich von 0,2 bis 0,7 des Propellerradius in Drehrichtung, also zur Anströmkante (L.E.) hin, verschoben werden, bis der Schwerpunkt wieder bei 0 liegt, d.h. durch den Wurzelpunkt geht.

Dieser Verlauf der Erzeugenden ist in Fig. 13 dargestellt. Bei großen Konturgradienten ist darauf zu achten, dass die Anzahl der Stützstellen entsprechen hoch zu wählen ist.

### 2. Herstellen der axialen Balance

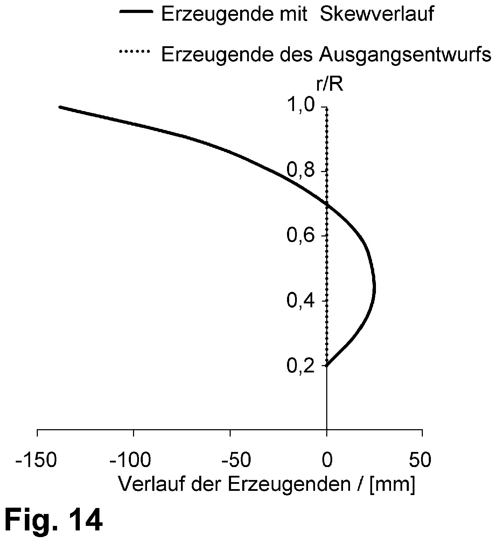

Hierzu wird nach Carlton (a.a.O., Kapitel 3.4,Seite 33 - 35) der Flügelhang errechnet, der auf die Flügelrücklage zurückzuführen ist (skew induced rake) und negativ als Rake aufgetragen. Die Fig. 14 zeigt einen Vergleich der Erzeugenden mit Skewverlauf zum Verlauf der Erzeugenden des Ausgangsentwurfs des Flügelprofils.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Propeller
- 12: Nabe
- 14a, 14b, 14c: Flügel
- 16a, 16b, 16c,: Flügelspitze
- 18a, 18b, 18c,: Erzeugende
- 20a, 20b, 20c: Wurzelpunkt
- 22a, 22b, 22c: radiale Gerade durch den Wurzelpunkt
- 24a, 24b, 24c: Tangente (an die Erzeugende)
- 26a, 26b, 26c: Tangente (an die Austrittskante)
- 28: Druckverlauf
- 30: Druckverlauf

- 100: Propeller
- 112: Nabe
- 114a, 114b, 114c, 114d: Flügel
- 116a, 116b, 116c, 116d: Flügelspitze

- 200: Propeller
- 212: Nabe
- 214a, 214b, 214c, 214d: Flügel
- 216a, 216b, 216c, 216d: Flügelspitze

- 300: Propeller
- 312: Nabe
- 314a, 314b, 314c, 314d, 314e, 314f: Flügel
- 316a, 316b, 316c, 316d, 316e, 316f: Flügelspitze

## Patentansprüche

1. Propeller für ein Wasserfahrzeug mit einer Nabe (12, 112, 212, 312) und mindestens zwei Flügeln (14a, 14b, 14c, 114a, 114b, 114c, 114d, 214a, 214b, 214c, 214d, 314a, 314b, 314c, 314d, 314e, 314f), wobei sich die Flügel (14a, 14b, 14c, 114a, 114b, 114c, 114d, 214a, 214b, 214c, 214d, 314a, 314b, 314c, 314d, 314e, 314f) ausgehend von der Nabe (12, 112, 212, 312) in radialer Richtung nach außen zur Flügelspitze (16a, 16b, 16c, 116a, 116b, 116c, 116d, 216a, 216b, 216c, 216d, 316a, 316b, 316c, 316d, 316e, 316f) erstrecken, an der der Spitzenwirbel des Flügels (14a, 14b, 14c, 114a, 114b, 114c, 114d, 214a, 214b, 214c, 214d, 314a, 314b, 314c, 314d, 314e, 314f) entsteht, wobei die Massenschwerpunkte aller Flügel (14a, 14b, 14c, 114a, 114b, 114c, 114d, 214a, 214b, 214c, 214d, 314a, 314b, 314c, 314d, 314e, 314f) in Bezug auf die Nabe (12, 112, 212, 312) den gleichen radialen Abstand zu der Nabe (12, 112, 212, 312) haben und/oder alle Flügel (14a, 14b, 14c, 114a, 114b, 114c, 114d, 214a, 214b, 214c, 214d, 314a, 314b, 314c, 314d, 314e, 314f) das gleiche Gewicht aufweisen, wobei der Propeller (10, 100, 200, 300) eine gleichmäßige Flügelteilung aufweist, so dass für alle Flügel (14a, 14b, 14c, 114a, 114b, 114c, 114d, 214a, 214b, 214c, 214d, 314a, 314b, 314c, 314d, 314e, 314f) des Propellers (10, 100, 200, 300) der Winkelabstand zwischen den auf der Nabe liegenden Wurzelpunkten (20a, 20b, 20c) der Erzeugenden [blade generator line] (18a, 18b, 18c) jeweils zweier aufeinanderfolgender Flügel (14a, 14b, 14c, 114a, 114b, 114c, 114d, 214a, 214b, 214c, 214d, 314a, 314b, 314c, 314d, 314e, 314f) gleich ist, und wobei der Winkelabstand zwischen den Flügelspitzen (16a, 16b, 16c, 116a, 116b, 116c, 116d, 216a, 216b, 216c, 216d, 316a, 316b, 316c, 316d, 316e, 316f) zweier aufeinanderfolgender Flügel (14a, 14b, 14c, 114a, 114b, 114c, 114d, 214a, 214b, 214c, 214d, 314a, 314b, 314c, 314d, 314e, 314f) des Propellers (10, 100, 200, 300) gegenüber dem Winkelabstand zwischen den Flügelspitzen (16a, 16b, 16c, 116a, 116b, 116c, 116d, 216a, 216b, 216c, 216d, 316a, 316b, 316c, 316d, 316e, 316f) zweier anderer aufeinanderfolgender Flügel (14a, 14b, 14c, 114a, 114b, 114c, 114d, 214a, 214b, 214c, 214d, 314a, 314b, 314c, 314d, 314e, 314f) unterschiedlich ist, so dass mindestens zwei Flügel (14a, 14b, 14c, 114a, 114b, 114c, 114d, 214a, 214b, 214c, 214d, 314a, 314b, 314c, 314d, 314e, 314f) des Propellers (10, 100, 200, 300) einen unterschiedlichen Verlauf der Flügelrücklage [Skew] aufweisen
und/oder
der Verlauf der Erzeugenden (18a, 18b, 18c) eines ersten Flügels (14a, 14b, 14c, 114a, 114b, 114c, 114d, 214a, 214b, 214c, 214d, 314a, 314b, 314c, 314d, 314e, 314f) von dem Verlauf der Erzeugenden (18a, 18b, 18c) mindestens eines weiteren Flügels (14a, 14b, 14c, 114a, 114b, 114c, 114d, 214a, 214b, 214c, 214d, 314a, 314b, 314c, 314d, 314e, 314f) abweicht.

2. Propeller nach dem vorstehenden Anspruch, **dadurch gekennzeichnet, dass** mindestens zwei Flügel (14a, 14b, 14c, 114a, 114b, 114c, 114d, 214a, 214b, 214c, 214d, 314a, 314b, 314c, 314d, 314e, 314f) unterschiedliche Erstreckungen in radialer Richtung aufweisen.

3. Propeller nach einem der vorstehenden Ansprüche, **dadurch gekennzeichnet, dass** der Steigungsverlauf des ersten Flügels (14a, 14b, 14c, 114a, 114b, 114c, 114d, 214a, 214b, 214c, 214d, 314a, 314b, 314c, 314d, 314e, 314f) von dem Steigungsverlauf des mindestens einen weiteren Flügels (14a, 14b, 14c, 114a, 114b, 114c, 114d, 214a, 214b, 214c, 214d, 314a, 314b, 314c, 314d, 314e, 314f) abweicht.

4. Propeller nach dem vorstehenden Anspruch, **dadurch gekennzeichnet, dass** bei einer geraden Anzahl an Flügeln (114a, 114b, 114c, 114d, 214a, 214b, 214c, 214d, 314a, 314b, 314c, 314d, 314e, 314f) und mindestens vier Flügeln (114a, 114b, 114c, 114d, 214a, 214b, 214c, 214d, 314a, 314b, 314c, 314d, 314e, 314f) jeweils zwei diametral gegenüberliegende Flügel (114a, 114b, 114c, 114d, 214a, 214b, 214c, 214d, 314a, 314b, 314c, 314d, 314e, 314f) identisch ausgebildet sind.

5. Propeller nach einem der vorstehenden Ansprüche, **dadurch gekennzeichnet, dass** die Massenschwerpunkte aller Flügel (14a, 14b, 14c, 114a, 114b, 114c, 114d, 214a, 214b, 214c, 214d, 314a, 314b, 314c, 314d, 314e, 314f) in Bezug auf die Nabe (12, 112, 212, 312) in der gleichen axialen Ebene liegen.

6. Propeller nach Anspruch 5, **dadurch gekennzeichnet, dass** der Verlauf des Flügelhangs [Rake] an den Verlauf der Flügelrücklage angepasst ist.

7. Propeller nach einem der vorstehenden Ansprüche, **dadurch gekennzeichnet, dass** die Länge der Erzeugenden (18a, 18b, 18c) in radialer Richtung mindestens eines Flügels (14a, 14b, 14c, 114a, 114b, 114c, 114d, 214a, 214b, 214c, 214d, 314a, 314b, 314c, 314d, 314e, 314f) von der Länge der Erzeugenden mindestens eines weiteren Flügels (14a, 14b, 14c, 114a, 114b, 114c, 114d, 214a, 214b, 214c, 214d, 314a, 314b, 314c, 314d, 314e, 314f) abweicht.

8. Propeller nach einem der vorstehenden Ansprüche, **dadurch gekennzeichnet, dass** der Abstand der Flügelspitzen (16a, 16b, 16c, 116a, 116b, 116c, 116d, 216a, 216b, 216c, 216d, 316a, 316b, 316c, 316d, 316e, 316f) zweier aufeinanderfolgender Flügel (14a, 14b, 14c, 114a, 114b, 114c, 114d, 214a, 214b, 214c, 214d, 314a, 314b, 314c, 314d, 314e, 314f) derart gewählt ist, dass im Auslegungspunkt die von den Flügelspitzen (16a, 16b, 16c, 116a, 116b, 116c, 116d, 216a, 216b, 216c, 216d, 316a, 316b, 316c, 316d, 316e, 316f) erzeugten Druckimpulse der Anregung des Schiffsrumpfes durch Druckimpulse vorgelagerter Flügelspitzen (16a, 16b, 16c, 116a, 116b, 116c, 116d, 216a, 216b, 216c, 216d, 316a, 316b, 316c, 316d, 316e, 316f) entgegenwirkt.

## Claims

1. A propeller for a watercraft, having a hub (12, 112, 212, 312) and having at least two blades (14a, 14b, 14c, 114a, 114b, 114c, 114d, 214a, 214b, 214c, 214d, 314a, 314b, 314c, 314d, 314e, 314f), wherein the blades (14a, 14b, 14c, 114a, 114b, 114c, 114d, 214a, 214b, 214c, 214d, 314a, 314b, 314c, 314d, 314e, 314f) extend from the hub (12, 112, 212, 312) in an outward radial direction toward the blade tip (16a, 16b, 16c, 116a, 116b, 116c, 116d, 216a, 216b, 216c, 216d, 316a, 316b, 316c, 316d, 316e, 316f) where the tip vortex of the blade (14a, 14b, 14c, 114a, 114b, 114c, 114d, 214a, 214b, 214c, 214d, 314a, 314b, 314c, 314d, 314e, 314f) is formed, wherein the centers of mass of all blades (14a, 14b, 14c, 114a, 114b, 114c, 114d, 214a, 214b, 214c, 214d, 314a, 314b, 314c, 314d, 314e, 314f) in relation to the hub (12, 112, 212, 312) have the same radial spacing to the hub (12, 112, 212, 312), and/or all blades (14a, 14b, 14c, 114a, 114b, 114c, 114d, 214a, 214b, 214c, 214d, 314a, 314b, 314c, 314d, 314e, 314f) have the same weight, wherein and the propeller (10, 100, 200, 300) has a uniform blade separation, so that the angular spacing between the roots (20a, 20b, 20c), situated on the hub, of the generatrices (blade generator lines) (18a, 18b, 18c) of each two successive blades (14a, 14b, 14c, 114a, 114b, 114c, 114d, 214a, 214b, 214c, 214d, 314a, 314b, 314c, 314d, 314e, 314f) is equal for all blades (14a, 14b, 14c, 114a, 114b, 114c, 114d, 214a, 214b, 214c, 214d, 314a, 314b, 314c, 314d, 314e, 314f) of the propeller (10, 100, 200, 300), and wherein the angular spacing between the blade tips (16a, 16b, 16c, 116a, 116b, 116c, 116d, 216a, 216b, 216c, 216d, 316a, 316b, 316c, 316d, 316e, 316f) of two successive blades (14a, 14b, 14c, 114a, 114b, 114c, 114d, 214a, 214b, 214c, 214d, 314a, 314b, 314c, 314d, 314e, 314f) of the propeller (10, 100, 200, 300) is different in relation to the angular spacing between the blade tips (16a, 16b, 16c, 116a, 116b, 116c, 116d, 216a, 216b, 216c, 216d, 316a, 316b, 316c, 316d, 316e, 316f) of two other successive blades (14a, 14b, 14c, 114a, 114b, 114c, 114d, 214a, 214b, 214c, 214d, 314a, 314b, 314c, 314d, 314e, 314f), so that at least two blades (14a, 14b, 14c, 114a, 114b, 114c, 114d, 214a, 214b, 214c, 214d, 314a, 314b, 314c, 314d, 314e, 314f) of the propeller (10, 100, 200, 300) have a different course of the blade skew,
and/or
the course of the generatrix (18a, 18b, 18c) of a first blade (14a, 14b, 14c, 114a, 114b, 114c, 114d, 214a, 214b, 214c, 214d, 314a, 314b, 314c, 314d, 314e, 314f) deviates from the course of the generatrix (18a, 18b, 18c) of at least one further blade (14a, 14b, 14c, 114a, 114b, 114c, 114d, 214a, 214b, 214c, 214d, 314a, 314b, 314c, 314d, 314e, 314f).

2. The propeller as claimed in the preceding claim, **characterized in that** at least two blades (14a, 14b, 14c, 114a, 114b, 114c, 114d, 214a, 214b, 214c, 214d, 314a, 314b, 314c, 314d, 314e, 314f) have different extents in a radial direction.

3. The propeller as claimed in any of the preceding claims, **characterized in that** the pitch course of the first blade (14a, 14b, 14c, 114a, 114b, 114c, 114d, 214a, 214b, 214c, 214d, 314a, 314b, 314c, 314d, 314e, 314f) deviates from the pitch course of the at least one further blade (14a, 14b, 14c, 114a, 114b, 114c, 114d, 214a, 214b, 214c, 214d, 314a, 314b, 314c, 314d, 314e, 314f).

4. The propeller as claimed in the preceding claim, **characterized in that**, in the case of an even number of blades (114a, 114b, 114c, 114d, 214a, 214b, 214c, 214d, 314a, 314b, 314c, 314d, 314e, 314f) and at least four blades (114a, 114b, 114c, 114d, 214a, 214b, 214c, 214d, 314a, 314b, 314c, 314d, 314e, 314f), in each case two diametrically oppositely situated blades (114a, 114b, 114c, 114d, 214a, 214b, 214c, 214d, 314a, 314b, 314c, 314d, 314e, 314f) are of identical form.

5. The propeller as claimed in any of the preceding claims, **characterized in that** the centers of mass of all blades (14a, 14b, 14c, 114a, 114b, 114c, 114d, 214a, 214b, 214c, 214d, 314a, 314b, 314c, 314d, 314e, 314f) lie in the same axial plane in relation to the hub (12, 112, 212, 312).

6. The propeller as claimed in claim 5, **characterized in that** the course of the blade rake is adapted to the course of the blade skew.

7. The propeller as claimed in any of the preceding claims, **characterized in that** the length of the generatrix (18a, 18b, 18c) in a radial direction of at least one blade (14a, 14b, 14c, 114a, 114b, 114c, 114d, 214a, 214b, 214c, 214d, 314a, 314b, 314c, 314d, 314e, 314f) deviates from the length of the generatrix of at least one further blade (14a, 14b, 14c, 114a, 114b, 114c, 114d, 214a, 214b, 214c, 214d, 314a, 314b, 314c, 314d, 314e, 314f).

8. The propeller as claimed in any of the preceding claims, **characterized in that** the spacing of the blade tips (16a, 16b, 16c, 116a, 116b, 116c, 116d, 216a, 216b, 216c, 216d, 316a, 316b, 316c, 316d, 316e, 316f) of two successive blades (14a, 14b, 14c, 114a, 114b, 114c, 114d, 214a, 214b, 214c, 214d, 314a, 314b, 314c, 314d, 314e, 314f) is selected such that, at the design point, the pressure pulses generated by the blade tips (16a, 16b, 16c, 116a, 116b, 116c, 116d, 216a, 216b, 216c, 216d, 316a, 316b, 316c, 316d, 316e, 316f) counteract the excitation of the hull by pressure pulses of upstream blade tips (16a, 16b, 16c, 116a, 116b, 116c, 116d, 216a, 216b, 216c, 216d, 316a, 316b, 316c, 316d, 316e, 316f).

## Revendications

1. Hélice pour un bateau comprenant un moyeu (12, 112, 212, 312) et au moins deux pales (14a, 14b, 14c, 114a, 114b, 114c, 114d, 214a, 214b, 214c, 214d, 314a, 314b, 314c, 314d, 314e, 314f), les pales (14a, 14b, 14c, 114a, 114b, 114c, 114d, 214a, 214b, 214c, 214d, 314a, 314b, 314c, 314d, 314e, 314f) s'étendant radialement vers l'extérieur depuis le moyeu (12, 112, 212, 312) jusqu'au bout de pale (16a, 16b, 16c, 116a, 116b, 116c, 116d, 216a, 216b, 216c, 216d, 316a, 316b, 316c, 316d, 316e, 316f) où se forme le tourbillon marginal de la pale (14a, 14b, 14c, 114a, 114b, 114c, 114d, 214a, 214b, 214c, 214d, 314a, 314b, 314c, 314d, 314e, 314f), les centres de masse de toutes les pales (14a, 14b, 14c, 114a, 114b, 114c, 114d, 214a, 214b, 214c, 214d, 314a, 314b, 314c, 314d, 314e, 314f) étant à la même distance radiale par rapport au moyeu (12, 112, 212, 312) du moyeu (12, 112, 212, 312) et/ou toutes les pales (14a, 14b, 14c, 114a, 114b, 114c, 114d, 214a, 214b, 214c, 214d, 314a, 314b, 314c, 314d, 314e, 314f) ayant le même poids, l'hélice (10, 100, 200, 300) présentant une répartition uniforme des pales, de sorte que pour toutes les pales (14a, 14b, 14c, 114a, 114b, 114c, 114d, 214a, 214b, 214c, 214d, 314a, 314b, 314c, 314d, 314e, 314f) de l'hélice (10, 100, 200, 300) la distance angulaire entre les points d'emplanture (20a, 20b, 20c) de la génératrice [blade generator line] (18a, 18b, 18c) situés sur le moyeu de deux pales (14a, 14b, 14c, 114a, 114b, 114c, 114d, 214a, 214b, 214c, 214d, 314a, 314b, 314c, 314d, 314e, 314f) successives est égale, et la distance angulaire entre les bouts de pales (16a, 16b, 16c, 116a, 116b, 116c, 116d, 216a, 216b, 216c, 216d, 316a, 316b, 316c, 316d, 316e, 316f) de deux pales (14a, 14b, 14c, 114a, 114b, 114c, 114d, 214a, 214b, 214c, 214d, 314a, 314b, 314c, 314d, 314e, 314f) successives de l'hélice (10, 100, 200, 300) étant différente de la distance angulaire entre les bouts de pales (16a, 16b, 16c, 116a, 116b, 116c, 116d, 216a, 216b, 216c, 216d, 316a, 316b, 316c, 316d, 316e, 316f) de deux autres pales (14a, 14b, 14c, 114a, 114b, 114c, 114d, 214a, 214b, 214c, 214d, 314a, 314b, 314c, 314d, 314e, 314f) successives, de sorte qu'au moins deux pales (14a, 14b, 14c, 114a, 114b, 114c, 114d, 214a, 214b, 214c, 214d, 314a, 314b, 314c, 314d, 314e, 314f) de l'hélice (10, 100, 200, 300) présentent un tracé du skew différent et/ou que le tracé de la génératrice (18a, 18b, 18c) d'une première pale (14a, 14b, 14c, 114a, 114b, 114c, 114d, 214a, 214b, 214c, 214d, 314a, 314b, 314c, 314d, 314e, 314f) diffère du tracé de la génératrice (18a, 18b, 18c) d'au moins une autre pale (14a, 14b, 14c, 114a, 114b, 114c, 114d, 214a, 214b, 214c, 214d, 314a, 314b, 314c, 314d, 314e, 314f).

2. Hélice selon la revendication précédente, **caractérisée en ce qu'**au moins deux pales (14a, 14b, 14c, 114a, 114b, 114c, 114d, 214a, 214b, 214c, 214d, 314a, 314b, 314c, 314d, 314e, 314f) présentent des extensions différentes dans la direction radiale.

3. Hélice selon l'une des revendications précédentes, **caractérisée en ce que** le tracé du pas de la première pale (14a, 14b, 14c, 114a, 114b, 114c, 114d, 214a, 214b, 214c, 214d, 314a, 314b, 314c, 314d, 314e, 314f) diffère du tracé du pas de l'au moins une autre pale (14a, 14b, 14c, 114a, 114b, 114c, 114d, 214a, 214b, 214c, 214d, 314a, 314b, 314c, 314d, 314e, 314f).

4. Hélice selon la revendication précédente, **caractérisée en ce que**, pour un nombre pair de pales (114a, 114b, 114c, 114d, 214a, 214b, 214c, 214d, 314a, 314b, 314c, 314d, 314e, 314f) et au moins quatre pales (114a, 114b, 114c, 114d, 214a, 214b, 214c, 214d, 314a, 314b, 314c, 314d, 314e, 314f), deux pales (114a, 114b, 114c, 114d, 214a, 214b, 214c, 214d, 314a, 314b, 314c, 314d, 314e, 314f) diamétralement opposées sont toujours formées de manière identique.

5. Hélice selon l'une des revendications précédentes, **caractérisée en ce que** les centres de masse de toutes les pales (14a, 14b, 14c, 114a, 114b, 114c, 114d, 214a, 214b, 214c, 214d, 314a, 314b, 314c, 314d, 314e, 314f) sont situés dans le même plan axial par rapport au moyeu (12, 112, 212, 312).

6. Hélice selon la revendication 5, **caractérisée en ce que** le tracé du rake est adapté au tracé du skew.

7. Hélice selon l'une des revendications précédentes, **caractérisée en ce que** la longueur de la génératrice (18a, 18b, 18c) dans la direction radiale d'au moins une pale (14a, 14b, 14c, 114a, 114b, 114c, 114d, 214a, 214b, 214c, 214d, 314a, 314b, 314c, 314d, 314e, 314f) diffère de la longueur de la génératrice d'au moins une autre pale (14a, 14b, 14c, 114a, 114b, 114c, 114d, 214a, 214b, 214c, 214d, 314a, 314b, 314c, 314d, 314e, 314f).

8. Hélice selon l'une des revendications précédentes, **caractérisée en ce que** la distance entre les bouts de pale (16a, 16b, 16c, 116a, 116b, 116c, 116d, 216a, 216b, 216c, 216d, 316a, 316b, 316c, 316d, 316e, 316f) de deux pales (14a, 14b, 14c, 114a, 114b, 114c, 114d, 214a, 214b, 214c, 214d, 314a, 314b, 314c, 314d, 314e, 314f) successives est choisie de telle sorte qu'au point nominal, les impulsions de pression générées par les bouts de pale (16a, 16b, 16c, 116a, 116b, 116c, 116d, 216a, 216b, 216c, 216d, 316a, 316b, 316c, 316d, 316e, 316f) s'opposent à l'excitation de la coque du bateau par les impulsions de pression des bouts de pale (16a, 16b, 16c, 116a, 116b, 116c, 116d, 216a, 216b, 216c, 216d, 316a, 316b, 316c, 316d, 316e, 316f) précédentes.
